# EUROPÄISCHE PATENTSCHRIFT

(11) **EP 3 277 450 B1**
(45) Veröffentlichungstag und Bekanntmachung des Hinweises auf die Patenterteilung: **19.08.2020**
(21) Anmeldenummer: 16717846.6
(22) Anmeldetag: 30.03.2016
(51) Int. Cl.: B21J 15/26, H02K 5/06, H02K 5/18, H02K 7/06

(54) **ANTRIEBSEINHEIT FÜR EINE SETZVORRICHTUNG, INSBESONDERE EIN NIETSETZGERÄT**
DRIVE UNIT FOR A SETTING DEVICE, IN PARTICULAR A RIVET SETTING DEVICE
UNITÉ D'ENTRAÎNEMENT POUR UN DISPOSITIF DE POSE, NOTAMMENT UN APPAREIL À POSER LES RIVETS

(30) Priorität: 02.04.2015 DE 102015205995
(43) Veröffentlichungstag der Anmeldung: 07.02.2018
(73) Patentinhaber: Ribe Anlagentechnik GmbH, 91126 Schwabach (DE)
(72) Erfinder: SKOLAUDE, Andreas, 91126 Schwabach (DE)
(74) Vertreter: FDST Patentanwälte
(86) Internationale Anmeldenummer: PCT/EP2016/056869
(87) Internationale Veröffentlichungsnummer: WO 2016/156359

(56) Entgegenhaltungen:
- EP-A2- 0 415 138
- DE-A1- 2 659 650
- DE-A1-102013 012 223
- DE-C1- 3 902 592
- US-A- 1 454 777
- US-A- 1 483 919

## Beschreibung

Die Erfindung betrifft eine Antriebseinheit für eine Setzvorrichtung, insbesondere für ein Nietsetzgerät mit den Merkmalen des Oberbegriffs des Anspruchs 1.

Eine derartige Antriebseinheit ist aus der DE 10 2013 012 223 A1 zu entnehmen. Bei der bekannten Antriebseinheit handelt es sich um einen Direktantrieb, bei dem Motorkomponenten, nämlich ein Rotor sowie eine Stator konzentrisch das Stellelement umgeben. Die Motorkomponenten sowie das Stellelement sind dabei in einem gemeinsamen Antriebsgehäuse angebracht.

Neben diesem Konzept des Direktantriebs mit den das Stellelement konzentrisch umgebenden Motorkomponenten sind auch Lösungen bekannt, bei denen der Elektromotor seitlich neben einer Setzeinheit angebracht ist und mit dem Stellelement beispielsweise über ein Zahnradgetriebe gekoppelt ist. Dies erfordert jedoch zumindest zu einer Seite hin einen deutlichen erhöhten Bauraum.

In der US 1 454 777 A sind beide Konzepte für eine Setzvorrichtung für Niete beschrieben. Zur Drehfixierung des Stellelementes sind radiale Stifte vorgesehen.

Aus den Dokumenten DE 39 02 592 C1, EP 0 415 138 A2 sowie DE 26 59 650 A1 sind Elektroantriebe, teilweise Spindelantriebe zu entnehmen, die integrierte Kühlvorrichtungen aufweisen.

Bei einer derartigen Antriebseinheit wird allgemein die Drehbewegung des Elektromotors in eine lineare Stellbewegung des Stellelements umgewandelt. Mithilfe des Stellelements wird ein Stempel gegen ein Werkstück verfahren, welcher hierbei mit hoher Kraft gegen das Werkstück gepresst wird. Der Stempel kann hierbei selbst als ein Bearbeitungswerkzeug, wie beispielsweise ein Stanzwerkzeug ausgebildet sein. Vorzugsweise wird eine derartige Antriebseinheit jedoch zum Einpressen eines Verbindungselements in ein Bauteil herangezogen. Bei dem Verbindungselement handelt es sich dabei insbesondere um ein Einpresselement, wie beispielsweise eine Einpressmutter, ein Einpressbolzen und insbesondere um einen Niet- vorzugsweise einen Stanzniet. Mit dem Verbindungselement werden in diesem Fall also allgemein zwei Bauteile, insbesondere zwei Bleche miteinander verbunden.

Derartige Antriebseinheiten werden insbesondere in der Kraftfahrzeugindustrie zur Verbindung von zwei Bauteilen miteinander eingesetzt. Die Stanzniettechnologie hat insbesondere bei Hybridbauteilen, also bei der Verbindung von Bauteilen ("Blechen") aus unterschiedlichen, auch nicht metallischen Werkstoffen das Punktschweißen ersetzt. Die Antriebseinheit ist hierbei an einer Werkzeugmaschine befestigt, bei der es sich insbesondere auch um einen Roboterarm eines Industrieroboters handeln kann. Für das Setzen der Verbindungselemente werden hohe Taktraten verlangt. Um eine sichere Verbindung zu gewährleisten muss die Antriebseinheit eine sehr hohe in axialer Richtung wirkende Setzkraft ausüben. Insbesondere beim Setzen von Stanznieten liegt diese Setzkraft beispielsweise bei über 50 kN. Dies verlangt eine entsprechend große und robuste Dimensionierung der Antriebseinheit.

Gleichzeitig ist jedoch wegen der komplexen Bauteilgeometrie insbesondere bei Fahrzeugkarosserien eine möglichst kompakt bauende Antriebseinheit verlangt, die möglichst wenige Störkonturen aufzeigt, um auch in beengten Bauräumen zuverlässig die Niete setzen zu können. Zudem ist ein geringes Gewicht angestrebt, um die zu beschleunigende Massen beim Verfahren der Werkzeugmaschine, z.B. des Roboterarms gering zu halten.

Ein typischer Setzvorgang insbesondere eines Stanzniets untergliedert sich dabei in einen Zustellweg, bei dem der Stanzniet zum Bauteil zugestellt wird und dem anschließenden eigentlichen Setzvorgang, bei dem die Setzkraft nahezu sprunghaft und stark ansteigt.

Ausgehend hiervon liegt der Erfindung die Aufgabe zugrunde, eine kompaktbauende Antriebseinheit insbesondere für eine Nietsetzvorrichtung anzugeben.

Die Aufgabe wird erfindungsgemäß gelöst, durch eine Antriebseinheit mit den Merkmalen des Anspruchs 1. Die Antriebseinheit umfasst hierbei einen elektrischen Direktantrieb, insbesondere Servomotor, mit einem Rotorpaket und einem Statorpaket als Motorkomponenten. Weiterhin umfasst die Antriebseinheit ein Stellelement, welches mit Hilfe des Direktantriebs in Axialrichtung linear versetzbar ist, wobei das Stellelement hierzu von den Motorkomponenten konzentrisch umgeben ist. Das Stellelement sowie wie Motorkomponenten sind dabei in einem freien Innenraum eines gemeinsamen Antriebsgehäuses untergebracht. Das Antriebsgehäuse weist dabei eine vordere Bauteilseite sowie eine hintere Maschinenseite auf. Als Bauteilseite wird hierbei ein vorderer Bereich der Antriebseinheit verstanden, welcher im Betrieb im montierten Zustand dem zu bearbeitenden Bauteil zugewandt ist. Entsprechend wird unter Maschinenseite ein hinterer Bereich der Antriebseinheit verstanden, der sich im Betrieb auf einer rückwärtigen, dem Bauteil abgewandten Seite befindet. Insbesondere zur Bauteilseite hin wird dabei eine sehr kompakte Bauweise mit geringerer radialer Ausdehnung gefordert.

Unter Rotorpaket bzw. Statorpaket werden vorliegend allgemein die erforderlichen elektromagnetischen Komponenten des Elektromotors, wie beispielsweise eine Spulenwicklung und/oder Permanentmagnete zur Ausbildung des Rotors bzw. Stators verstanden. Zur Umwandlung der Rotationsbewegung des Rotors in die Linearbewegung des Stellelements ist weiterhin ein Antriebselement insbesondere ein Spindelelement, speziell eine Spindelmutter erforderlich. Dieses Antriebselement wird vorliegend ebenfalls als eine Motorkomponente bezeichnet.

Das Antriebsgehäuse weist weiterhin ein Hauptteil sowie ein mit diesem in einem Verbindungsbereich verbundenen Führungsteil auf. Das Führungsteil ist dabei in Axialrichtung insbesondere als ein rückwärtiges Endteil des Antriebsgehäuses ausgebildet. Innerhalb des Führungsteils ist dabei das Stellelement insbesondere gleitverschieblich geführt. Aufgrund der beim Setzvorgang auftretenden Kräfte, insbesondere bei einem sprunghaften Anstieg einer axialen Setzkraft, steigt ein Drehmoment bei der Umwandelung der Rotationsbewegung in die axiale Stellbewegung des Stellelements ebenfalls stark an. Um dieses hohe Drehmoment zuverlässig bei gleichzeitig kompakter Bauweise aufzufangen, weisen im Verbindungsbereich der Hauptteil und das Führungsteil - in einer Ebene senkrecht zur Axialrichtung betrachtet - eine asymmetrische Ausgestaltung derart auf, dass das Drehmoment asymmetrisch übertragen wird. Unter asymmetrischer Drehmomentübertragung wird hierbei verstanden, dass das Drehmoment um die Axialrichtung und damit auch um eine Rotationsachse des Direktantriebs herum nicht gleichmäßig verteilt von den Motorkomponenten auf das Antriebsgehäuse übertragen wird. Die Drehkräfte verteilen sich daher eben nicht gleichmäßig um den Umfang des Antriebsgehäuses. Vielmehr ist das Antriebsgehäuse derart ausgebildet, dass ein größerer Teil und vorzugsweise der Hauptteil des Drehmoments im rückwärtigen Teil des Antriebsgehäuses zur Bauteilseite hin aufgenommen wird. Im Verbindungsbereich zwischen Führungsteil und Hauptteil sind dabei Drehmomentübertragungselemente angeordnet, welche über Drehmomentflächen miteinander zur Übertragung des Drehmoments zusammenwirken. Diese Drehmomentübertragungselemente sind daher zumindest hauptsächlich und vorzugsweise vollständig auf der Maschinenseite angeordnet. Unter Übertragung eines Hauptteils des Drehmoments bzw. unter hauptsächlich wird hierbei verstanden, dass zumindest mehr als 70 und bevorzugt mehr als 90 % des Gesamtdrehmoments auf der Maschinenseite übertragen wird und dass daher auf der Bauteilseite allenfalls eine geringe Drehmomentübertragung zwischen Führungsteil und Hauptteil erfolgt.

Durch diese Maßnahme wird der besondere Vorteil erzielt, dass das Antriebsgehäuse und damit die gesamte Antriebseinheit zur Bauteilseite hin extrem kompakt und platzsparend ausgebildet werden kann. Entsprechend sind daher zur relevanten Bauteileseite hin wenig Störkonturen ausgebildet und die Antriebseinheit weist zur Bauteilseite hin eine nur geringe radiale Ausdehnung auf.

In bevorzugter Ausgestaltung ist dabei vorgesehen, dass die Drehmomentübertragung ausschließlich auf der Maschinenseite erfolgt. Die für die Drehmomentübertragung vorgesehenen Drehmomentübertragungsflächen sind daher vorzugsweise ausschließlich auf der Maschinenseite angeordnet.

Im Hinblick auf eine möglichst kompakte Ausgestaltung weist dabei das Hauptteil gerade auch im Verbindungsbereich auf der Bauteilseite lediglich eine dünne Gehäusewandung auf, wohingegen es zur Maschinenseite hin eine massive Wandung aufweist, über die das Drehmoment aufgenommen werden kann. Bei der Gehäusewandung zur Bauteilseite hin handelt es sich dabei lediglich um eine dünne Blechwandung. Aus gewichtsgründen ist das Gehäuse vorzugsweise grundsätzlich aus einem vorzugsweise metallischen Leichtbauwerkstoff, insbesondere Aluminium ausgebildet. In diesem Fall beträgt die Wandstärke vorzugsweise lediglich 2 bis 4 mm, und bevorzugt bei 2,5 mm.

Insgesamt weist das Antriebsgehäuse eine asymmetrische Ausgestaltung in einer Ebene senkrecht zur Axialrichtung betrachtet auf. Vorzugsweise ist dabei das Hauptteil zur Bauteilseite hin als Teilzylinder, insbesondere als Halbzylinder ausgebildet. Im Querschnitt betrachtet ist daher das Hauptteil - zumindest im Verbindungsbereich - zur Bauteilseite hin als Teilkreis ausgebildet. Zur Maschinenseite hin ist das Hauptteil dem gegenüber vorzugsweise in etwa quaderförmig ausgebildet, so dass das Hauptteil zur Maschinenseite also im Querschnitt betrachtet eine polygonförmige, insbesondere in etwa rechteckförmige und vorzugsweise eine trapezförmige Querschnittsfläche aufweist. Entsprechend ist das Führungsteil im Verbindungsbereich komplementär hierzu ausgebildet.

Im Hinblick auf die möglichst kompakte Ausgestaltung insbesondere zur Bauteilseite hin ist dabei zweckmäßigerweise vorgesehen, dass die radiale Ausdehnung des Hauptteils zur Maschinenseite um zumindest 25 % und vorzugsweise um zumindest 40 oder 50 % größer ist als seine radiale Ausdehnung zur Bauteilseite hin. Die maximale radiale Ausdehnung zur Bauteilseite hin liegt dabei vorzugsweise bei maximal 60 bis 70 mm und vorzugsweise lediglich bei 65 mm. Entsprechend liegt die radiale Ausdehnung zur Maschinenseite hin deutlich darüber und insbesondere im Bereich 80 bis 100 mm.

Im Hinblick auf eine zuverlässige Übertragung des Drehmoments sind die entsprechenden Drehmomentsübertragungsflächen möglichst groß ausgebildet. Zweckdienlicher Weise greifen dabei das Hauptteil und das Führungsteil zur Ausbildung dieser Drehmomentübertragungsflächen formschlüssig ineinander. Insbesondere sind daher keine Verbindungselemente wie Schrauben angeordnet, welche für die Drehmomentübertragung herangezogen werden. Bei Schrauben oder sonstigen, sich in Axialrichtung erstreckenden bolzenförmigen Elementen wären allenfalls geringe, punktuelle Drehmomentübertragungsflächen ausgebildet. Durch das formschlüssige Ineinandergreifen werden dabei an einer Umfangskontur die Drehmomentübertragungsflächen ausgebildet. Im Hinblick auf die asymmetrische Drehmomentübertragung ist diese Umfangskontur, auch als Eingriffskontur bezeichnet, asymmetrisch ausgebildet. Insbesondere sind durch die Eingriffskontur wiederum ein Hauptteil der Drehmomentübertragungsflächen und vorzugsweise sämtliche Drehmomentübertragungsflächen im Bereich zur Maschinenseite hin ausgebildet. Dies erlaubt im Bereich zur Bauteilseite hin eine entsprechende dünnwandige Ausgestaltung des Antriebsgehäuses.

Zweckdienlicherweise hat die Eingriffskontur - in eine Ebene senkrecht zur Axialrichtung betrachtet - zur Bauteilseite hin einen teilkreisförmigen Verlauf. Zur Bauteilseite hin zeigt die Eingriffskontur daher keine Angriffsfläche für eine Drehmomentübertragung.

Weiterhin ist vorzugsweise die Eingriffskontur im Querschnitt betrachtet zur Maschinenseite hin nach Art eines Polygons und insbesondere dreieckförmig ausgebildet. Insgesamt weist das Hauptteil daher eine durch ein Polygon sowie durch einen sich daran anschließenden Teilkreis gebildete Querschnittsfläche auf. Bei dem Teilkreis handelt es sich vorzugsweise zumindest um einen Halbkreis

Die Drehmomentübertragung erfolgt vorzugsweise ausschließlich, zumindest zu über 90% über die Eingriffskontur.

Die Eingriffskontur ist dabei zweckdienlicher Weise an einer Unterseite eines Befestigungsflansches ausgebildet. Das Führungsteil ist mit diesem Befestigungsflansch auf den Hauptteil des Antriebsgehäuses aufgesetzt und mit diesem verbunden. Die Eingriffskontur erstreckt sich daher in Axialrichtung in das Hauptteil des Antriebsgehäuses hinein. Die Seitenfläche der Angriffskontur, welche zur Maschinenseite hin die Drehmomentübertragungsflächen ausbildet, liegt dabei passgenau in einer entsprechenden Aufnahmekontur am Hauptteil ein. Durch die Ausbildung der Eingriffskontur an der Unterseite des Befestigungsflansches ist daher in einem Längsschnitt betrachtet eine in etwa stufenartige Ausgestaltung erreicht.

Das Führungsteil weist weiterhin in einem rückwärtigen Bereich einen rohrförmigen Teilbereich auf, in dem das Stellelement gleitverschieblich geführt ist. Dieser rohrförmige Teilbereich erstreckt sich zumindest bis zum Befestigungsflansch.

Vorzugsweise ragt der rohrförmige Teilbereich ein Teilstück in das Hauptteil hinein und bildet ein Widerlager z.B. für eine Lagerung der Motorkomponenten.

Zur drehfesten Verschiebung des Stellelements innerhalb des rohrförmigen rückwärtigen Teilbereichs ist am Stellelement ein entsprechendes Verdrehsicherungselement ausgebildet, welches insbesondere als ein polygonförmiges Gleitelement ausgebildet ist. Dieses ist insbesondere an der Rückseite des Stellelements drehfest mit diesem nach Art eines plattenförmigen Elements verbunden.

Im Betrieb wird mit Hilfe des Direktantriebs das Stellelement in Axialrichtung um einen definierten Zustellhub versetzt. Bei maximalem Zustellhub befindet sich dabei das Stellelement in einer ausgefahrenen Position. Die Antriebseinheit ist im Hinblick auf ihre Abmessungen vorzugsweise derart konzipiert, dass in der ausgefahrenen Position das Verdrehsicherungselement auf der gleichen axialen Höhe des Verbindungsbereichs positioniert ist, in dem die Drehmomentübertragungsflächen ausgebildet sind. Diese Ausgestaltung beruht auf der Überlegung, dass das maximale Drehmoment typischerweise im ausgefahrenen Zustand auftritt und dass dann eine möglichst unmittelbare Übertragung des Drehmoments von dem Stellelement über das Verdrehsicherungselement auf das Antriebsgehäuse erfolgen sollte, ohne dass ein zu großer axialer Abstand zwischen den Drehmomentübertragungsflächen und dem Verdrehsicherungselement vorliegt. Unter "auf gleicher axialer Höhe" wird hierbei verstanden, dass in ausgefahrener Position das Verdrehsicherungselement exakt auf der Höhe des Verbindungsbereichs und der Drehmomentübertragungsflächen ist oder in Axialrichtung maximal um 10 bis 20 mm von diesen, also insbesondere von der Eingriffskontur, beabstandet sind.

Zur Ausbildung des Direktantriebs ist das Stellelement in einem rückwärtigen Bereich vorzugsweise als eine Spindel ausgebildet, die in einem Teilbereich von einer Spindelmutter umgeben ist. Die Spindelmutter selbst ist wiederum mit dem Rotorpaket des Direktantriebs drehfest verbunden. Hierzu ist die Spindelmutter vorzugsweise an der radialen Innenseite einer Rotorhülse befestigt und das Rotorpaket ist an der Außenseite der Rotorhülse befestigt. Entsprechend ist dann das Statorpaket radial außenseitig zum Rotorpaket angeordnet.

Durch diese Ausgestaltung mit dem innenliegenden Rotor ist insgesamt eine sehr kompakte Ausgestaltung der gesamten Antriebseinheit gewährleistet.

Aufgrund der erforderlichen hohen Setzkräfte ist die Antriebseinheit insgesamt in geeigneter Weise ausgebildet und in der Lage, eine axiale Kraft auf das Stellelement von > 50 kN und insbesondere von > 60 kN zur erzeugen. Aufgrund des speziellen Setzvorgangs bei einem Stanzniet-Setzvorgang tritt diese Kraft als kurzfristige Spitzenlast auf. Um diese Kräfte erzeugen zu können ist der Direktantrieb entsprechend ausgelegt und für eine Spitzen-Stromaufnahme von > 30 A und insbesondere von > 40 A bis vorzugsweise 60 A ausgelegt. Der Elektromotor weist insgesamt dabei weiterhin eine elektrische Spitzenleistung von mehreren kW, insbesondere zwischen 2 und 4 kW auf. Die Spitzenleistung wird dabei bei einem Stanznietvorgang beispielsweise für jeweils eine Zeitdauer im Bereich von 100 bis 150 ms aufgebracht. Da während dieser Spitzenleistung allenfalls nur noch eine geringe Axialverstellung erfolgt, tritt während dieser Spitzenleistung beim eigentlichen Setzvorgang eine extrem hohe Verlustleistung auf, welche ebenfalls mehrere kW beträgt. So beträgt die Verlustleistung beispielsweise etwa 2,5 kW. Aufgrund der weiterhin angestrebten hohen Taktraten bedeutet dies, dass der Direktantrieb insgesamt auch einer hohen thermischen Belastung ausgesetzt ist.

Um für eine Kühlung der Antriebseinheit zu sorgen, ist daher weiterhin in bevorzugter Ausgestaltung der Hauptteil des Antriebsgehäuses zur Maschinenseite hin und vorzugsweise ausschließlich zur Maschinenseite hin mit einer Kühlrippenstruktur versehen.

Aufgrund der hohen thermischen Belastung und der extrem kompakten Bauweise besteht jedoch die Gefahr, dass selbst mit einer derartigen Kühlrippenstruktur nur eine mangelnde Kühlung erreicht wird. Grundsätzlich besteht die Möglichkeit, das Hauptteil mit Kühlmittelkanäle zur durchsetzen, durch die dann also im Vollmaterial des Hauptteils ein Kühlfluid zur Kühlung des Hauptteils durchgeleitet wird. Da bei derartigen elektrischen Antriebseinheiten möglichst auf hydraulische Anschlüsse verzichtet werden soll, ist eine hydraulische Kühlung nicht erstrebenswert.

Ausgehend hiervon liegt einem weiteren wichtigen Aspekt der Erfindung, eine zuverlässige Kühlung einer derartigen Antriebseinheit auch bei kompaktem Aufbau zuverlässig zu gewährleisten.

Um eine ausreichende Kühlung zu gewährleisten ist in das Hauptteil bevorzugt lediglich zur Maschinenseite hin eine Kühlvorrichtung zur Innenkühlung der Motorkomponenten angeordnet. Hierzu ist die Kühlvorrichtung derart ausgebildet, dass in den Innenraum des Antriebsgehäuses ein Fluid einströmbar ist. Bei dem Fluid handelt es sich dabei insbesondere um Gas / Luft und nicht um eine hydraulische Flüssigkeit. Die Verwendung einer Flüssigkeit ist jedoch grundsätzlich nicht ausgeschlossen.

Entscheidender Gesichtspunkt hierbei ist, dass der freie Innenraum, in dem die Motorkomponenten angeordnet sind, von dem Fluid unmittelbar durchströmt wird. Anders als beispielsweise bei lediglich hydraulischen Gehäusekühlungen, bei denen ein entsprechendes Fluid lediglich durch die massive Wandung des Hauptteils oder eines Kühlkörpers strömt, wird also durch die hier vorgestellte Innenkühlung das Kühlfluid unmittelbar durch den Innenraum geführt, in dem die Komponenten gelagert sind. Dies führt also dazu, dass die Wärme unmittelbar von den Motorkomponenten an das Fluid abgegeben wird, so dass eine direkte, unmittelbare und damit effiziente Kühlung erfolgt. Durch diese unmittelbare Kühlung wird daher insbesondere auch eine ausreichende Kühlung bei der Verwendung von Luft als Fluid gewährleistet. Es wird also vorzugsweise auf jegliche hydraulische Komponente für die Kühlung und insbesondere auch für die gesamte Antriebseinheit verzichtet.

Zur Ausbildung der Kühlvorrichtung sind dabei Kühlkanäle innerhalb des Hauptteils ausgebildet, die von einer Außenseite in den freien Innenraum des Antriebsgehäuses münden. Zweckdienlicher Weise sind diese Kühlkanäle dabei als Bohrungen ausgebildet. Bevorzugt ist dabei auf einer Einströmseite ein insbesondere einziger Zuführkanal ausgebildet, welcher dann in einen freien Ringraum mündet, welcher also quasi als Verteilerraum ausgebildet ist, so dass das einströmende Fluid umfangsseitig möglichst gleichmäßig verteilt wird.

In Axialrichtung beabstandet hiervon ist zweckdienlicher Weise an einer Ausströmseite ebenfalls ein freier Ringraum ausgebildet, welcher als Sammelraum dient und von dem zumindest ein Auslasskanal sich in radialer Richtung zu einer Außenseite des Hauptteils erstreckt. Die entsprechenden Anschlüsse für das Fluid sind bevorzugt an einer Außenseite des Hauptteils auf der Maschinenseite angeordnet, so dass auf der Bauteilseite keine Anschlüsse vorliegen. Die beiden Ringräume auf der Einströmseite und Ausströmseite sind dabei jeweils endseitig an den Motorkomponenten ausgebildet. Das Fluid strömt daher im Betrieb über den Zuführkanal in den Verteiler-Ringraum an der Einströmseite ein, strömt anschließend über den gesamten Umfang verteilt in Axialrichtung an den Motorkomponenten vorbei und erreicht an der Ausströmseite den Sammelraum und verlässt diesen über entsprechende Auslasskanäle.

Für eine Kühlung entlang der Motorkomponenten sind zweckdienlicher Weise als Nuten ausgebildete Strömungskanäle für das Fluid ausgebildet. Diese Nuten verlaufen dabei insbesondere unmittelbar entlang zumindest einer der Motorkomponenten. Die Nuten sind dabei vorzugsweise um den Umfang verteilt und insbesondere gleichverteilt ausgebildet. Beispielsweise sind mehr als fünf und vorzugsweise mehr als acht, beispielsweise acht bis 15 Strömungskanäle ausgebildet. Durch das zusätzliche Einbringen derartiger Strömungsnuten wird insgesamt eine große Strömungsquerschnittsfläche bereitgestellt, so dass insgesamt nur ein geringer Staudruck entsteht und somit ein ausreichender Kühlstrom und damit eine ausreichende Kühlung gewährleistet ist.

Unter Nuten werden allgemein nutartige Kanäle verstanden, die sich von der Einströmseite zur Ausströmseite erstrecken. Sie verlaufen beispielsweise geradlinig als Längsnuten. Sie können grundsätzlich aber auch einen mäanderförmigen Verlauf annehmen.

Die Motorkomponenten, speziell das Rotorpaket oder das Statorpaket sind dabei üblicherweise auf einem Träger befestigt. Bevorzugt weist dieser Träger zur Ausbildung der Strömungskanäle vorzugsweise die Nuten auf. Durch diese Maßnahme ist daher eine effiziente direkte Kühlung der zumindest einen Motorkomponente erreicht. Bei dieser Motorkomponente handelt es sich insbesondere um das Rotorpaket, welches an der bereits erwähnten Rotorhülse befestigt ist. An der Außenseite der Rotorhülse, auf der auch das Rotorpaket befestig ist, sind die Nuten eingearbeitet.

In zweckdienlicher Ausgestaltung sind die Nuten auf einer den Motorkomponenten (Rotorpaket bzw. Statorpaket) gegenüberliegenden Seite des Trägers angeordnet. Sie müssen dabei nicht zwingend in den Träger integriert sein. Dieser Ausgestaltung liegt die Überlegung zu Grunde, dass aus elektrischen Gründen häufig eine hohe Packungsdichte der einzelnen Magnete beispielswiese des Rotorpakets erforderlich ist, so dass auf der diesen Magneten zugewandten Seite des Trägers kein ausreichender Raum für die Einbringung von Nuten als Strömungskanälen ermöglicht ist.

Bei der hier bevorzugten Ausgestaltung ist der Träger als Rotorhülse ausgebildet, welche zum Übertagen der Rotationsbewegung mit einem Antriebselement speziell des Spindelantriebs und insbesondere mit der Spindelmutter verbunden ist. Bevorzugt sind nunmehr in den Mantel der Spindelmutter, mit dem die Rotorhülse drehfest verbunden ist, die Nuten eingebracht. Die Rotorhülse umgibt dabei die Spindelmutter typischerweise konzentrisch und liegt- bis auf die Nuten- bevorzugt vollflächig an dem Mantel der Spindelmutter an.

Um eine ausreichende Kühlung sicherzustellen sind insbesondere ergänzend zu den Nuten Freiräume oder Spalten innerhalb der Motorkomponenten, insbesondere zwischen den einzelnen Magneten als weitere Strömungskanäle genutzt, d.h. sie sind in den Kühlweg von der Einlassseite zur Auslassseite mit eingebunden.

Zweckdienlicherweise ist allgemein die Gesamtquerschnittsfläche der Strömungskanäle größergleich einer Querschnittsfläche eines Zuführkanals, über den das Fluid zugeführt wird. Dadurch wird der Staudruck gering gehalten. Werden lediglich Nuten als Strömungskanäle eingesetzt, so bilden ausschließlich diese die Gesamtquerschnittsfläche. Werden die Spalte ergänzend als Strömungskanäle eingesetzt, so tragen diese zur Gesamtquerschnittsfläche bei.

Im Hinblick auf das erforderliche Durchströmen des Hauptteils mittels des Fluids ist weiterhin ein Pumpenelement angeordnet, welches bevorzugt unmittelbar in einen Kanalabschnitt insbesondere des Zuführkanals integriert ist. Bei der Verwendung von Luft als Fluid ist das Pumpelement dabei speziell als ein Ventilator oder Lüfter ausgebildet. Zweckdienlicherweise wird über dieses Pumpelement Luft aus der Umgebung angesaugt, so dass also kein Anschluss an einen Kühlkreislauf erforderlich ist.

Der Lüfter ist dabei zweckdienlicherweise für einen Luftstrom von mehreren 10 I/min und vorzugsweise von über 100 I/min ausgebildet. Speziell ist er für eine Leistung von 120 bis150 I/min ausgebildet.

Bei dem Pumpelement handelt es sich dabei weiterhin vorzugsweise um ein Steuer- und/oder regelbares Pumpelement, dessen Förderleistung in Abhängigkeit eines aktuellen Kühlbedarfs gesteuert oder geregelt wird.

Aufgrund der verschieblichen Lagerung des Stellelements innerhalb des Antriebsgehäuses ist dieses üblicherweise mit Hilfe von Schmiermittel wie beispielsweise Öl oder Fett gleitverschieblich geführt. In zweckdienlicher Weiterbildung ist nunmehr innerhalb des Antriebsgehäuses ein Strömungsraum für das Fluid ausgebildet, welches zum Stellelement hin abgedichtet ist. Durch diese Abdichtung ist daher gewährleistet, dass das Fluid nicht mit derartigen Schmiermitteln wie Öl, Lagerfett, etc. in Berührung kommt. Ein derartiger Kontakt würde zum Einen zu einer Belastung und Verschmutzung der Störungskomponenten für das Fluid, speziell auch für den Lüfter, führen. Zum Anderen würde dadurch auch ein Schmiermittelverbrauch erfolgen, welcher entweder zu einem erhöhten Wartungsaufwand oder zu einer verkürzten Lebensdauer führen würde. Durch den abgedichteten Strömungsraum ist dies daher in vorteilhafter Weise vermieden.

Zur Abdichtung des Strömungsraums strömt das Fluid daher lediglich zwischen zwei axial voneinander beabstandeten Abdichtbereichen. Diese sind insbesondere durch abgedichtete Lager erzielt, mit denen die Rotorhülse gelagert ist. Insbesondere bei einer Strömungsführung entlang der Längsnuten an der Außenseite der Rotorhülse wird in Kombination mit den abgedichteten Lagern daher eine Strömungsführung in einem (Ring-) Raum außerhalb des Stellelements gewährleistet und damit ein Kontakt mit dem Schmiermittel vermieden.

Im Hinblick auf die gewünschte kompakte Ausgestaltung weist diese eine Gesamtlänge auf, welche sich zusammensetzt aus dem doppelten Stellhub zuzüglich einer Konstanten, die lediglich im Bereich von 70 bis 100 mm liegt. Der Stellhub liegt bei derartigen Antriebseinheiten typischerweise im Bereich von 120 bis 200 mm und vorzugsweise beispielsweise im Bereich von 160 mm. Die Gesamtlänge insbesondere aufgrund der zuvor beschriebenen Konzepte und des grundsätzlichen Aufbaus als Direktantrieb liegt daher bei einem Stellhub von 160 mm bei lediglich etwa 390 bis 420 mm.

Die Konstante entspricht dabei insbesondere einer Länge der Spindelmutter.

Vorteilhaft soll eine möglichst kompakte Bauweise, speziell eine geringe Baulänge erreicht werden. Bei herkömmlichen Antriebseinheiten ist das Stellelement mehrteilig ausgebildet, wobei der rückwärtige Teil aus einem Spindelelement, üblicherweise der Spindel sowie einem vorderen Stößel ausgebildet ist. Die Spindel ist dabei mit einem Spindelgewinde versehen und herkömmlich als separate Baueinheit ausgebildet. Diese ist in einem Verbindungsbereich mit dem Stößel verbunden.

Um eine möglichst kompakte und kurzbauende Ausgestaltung zu erreichen ist nunmehr vorgesehen, dass Spindelelement und Stößel als ein einstückiges Teil ohne mechanische Verbindungselemente ausgebildet sind. Insbesondere sind die beiden Teile aus einem gemeinsamen Werkstück ausgebildet, es liegt also keine Verbindungsstelle zwischen den beiden Teilen vor, weder durch mechanische noch durch sonstige Verbindungen. Aufgrund der auftretenden hohen Drehmomente ist bei herkömmlichen Ausgestaltungen eine Verbindung zwischen den beiden separaten Teilen erforderlich, die hohe Kräfte übernehmen kann. Entsprechend ist dieser Verbindungsbereich auch vergleichsweise großbauend. Durch die einstückige Ausgestaltung lässt sich nunmehr eine deutlich verkürzte Bauweise erreichen. Ein weiterer Vorteil der einstückigen Bauweise ist in der verbesserten Steifigkeit des gesamten Stellelements zu sehen.

Diese Ausgestaltung ist insbesondere bei Antriebseinheiten von Vorteil, bei denen der Stößel als ein Rohr ausgebildet ist, in dem weitere Komponenten aufgenommen sind. So ist bspw. bei vielen Setzvorgängen erforderlich, dass ein Niederhalter, bspw. zum Anpressen der Bauteile vorgesehen ist. Speziell bei derartigen Ausgestaltungen mit integriertem Niederhalter wird dieser am Stößel, insbesondere innerhalb des Stößelrohres gleitverschieblich gegen die Federkraft eines Federelements geführt.

Insgesamt ist durch die hier beschriebenen Maßnahmen eine extrem kompaktbauende Antriebseinheit insbesondere für ein Nietsetzgerät erreicht, welches lediglich eine geringe Gesamtlänge bei zugleich geringer radialer Ausdehnung zumindest zur Bauteilseite hin aufweist. Eine derartige Antriebseinheit wird üblicherweise an einem Halter einer Maschine befestigt. Bei diesem Halter handelt es sich vorzugsweise um einen C-Bügel. In diesem wird die Antriebseinheit zweckdienlicher Weise mit einem vorderen Teilbereich des Antriebsgehäuses gehalten. Ds Stellelement weist weiterhin an seinem Vorderende üblicherweise den Stößel auf. Das Stellelement ist daher insgesamt in seinem rückwärtigen Teilbereich als Spindel und seinem vorderen Teilbereich als Stößel, beispielsweise als Stößelstab oder auch als Stößelrohr ausgebildet. Der Stößel verfährt dabei in Axialrichtung zur Ausübung des Zustellhubs frontseitig aus einem Vorderende des Antriebsgehäuses heraus. An ihm ist üblicherweise weiterhin ein Stempel sowie ergänzend ein Niederhalter und/oder eine automatische Zuführeinheit für Befestigungselemente, insbesondere Niete, ausgebildet. Diese werden hierbei insbesondere über einen Zuführschlauch zugeführt.

Die hier beschriebene Antriebseinheit ist nicht auf die Verwendung bei Stanznietgeräten beschränkt sondern ist allgemein für Anwendungen einsetzbar, bei denen hohe axiale Linearkräfte bei kompakten Bauraum erforderlich sind, insbesondere für Anwendungen im Bereich der mechanischen Fügetechnik. Bevorzugt wird die Antriebseinheit bei Füge- oder Setzeinheiten eingesetzt, mit deren Hilfe Füge- oder Verbindungselemente in ein Bauteil eingebracht, insbesondere eingepresst werden. Bei den Verbindungselementen handelt es sich beispielsweise um selbststanzende Elemente, wie beispielsweise Stanzniete oder Stanzmuttern oder auch um sonstige Einpresselemente, wie Muttern oder Bolzen, zum Einpressen in ein vorgelochtes (Blech-) Bauteil.

Ein Ausführungsbeispiel der Erfindung wird nachfolgend anhand der Figuren näher erläutert, diese zeigen:
- Fig. 1: eine Setzvorrichtung insbesondere Nietsetzvorrichtung in einer Seitenansicht mit einem C-bogenförmigen Halter, an dem eine Antriebseinheit befestigt ist,
- Fig. 2: die in der Fig. 1 dargestellte Antriebseinheit in einer Seitenansicht,
- Fig. 3: die in der Fig. 1 dargestellte Antriebseinheit in einer Ansicht auf eine Maschinenseite der Antriebseinheit,
- Fig. 4: ein Längsschnitt durch die Antriebseinheit gem. Fig. 2,
- Fig. 5: eine perspektivische Darstellung der Antriebseinheit, wobei unter anderem ein Führungsteil des Antriebsgehäuses ausgeblendet ist,
- Fig. 6: eine perspektivische Darstellung der Antriebseinheit, bei der unter anderem ein Hauptteil des Antriebsgehäuses ausgeblendet ist sowie
- Fig. 7: eine Schnittdarstellung entlang der Schnittlinie A-A in Fig. 2.

In den Figuren sind gleichwirkende Teile mit den gleichen Bezugszeichen versehen.

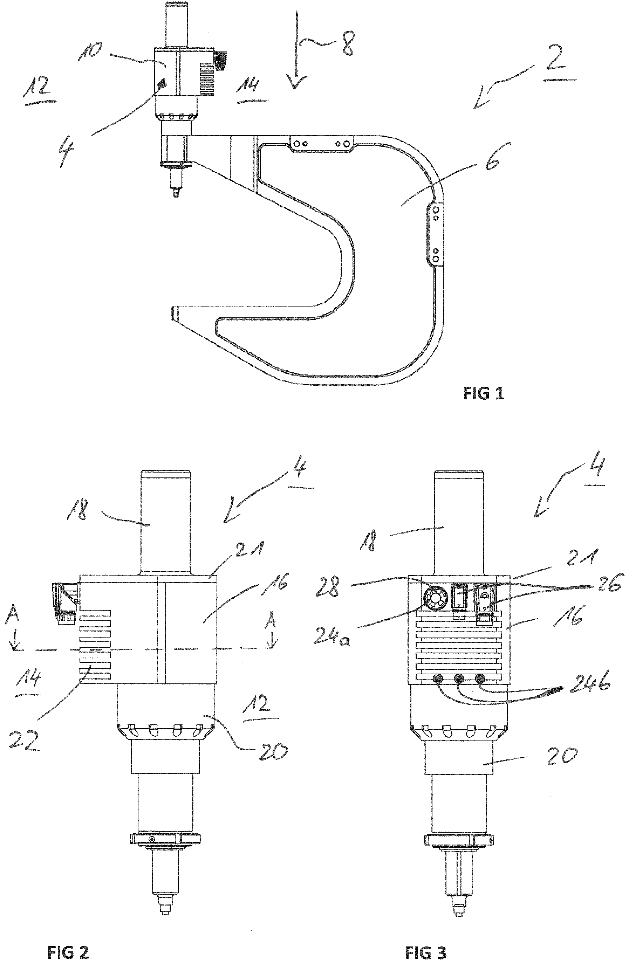

Eine Setzvorrichtung 2 gemäß Figur 1 umfasst eine Antriebseinheit 4, welche an einem Halter 6 befestigt ist, der insbesondere als C-Bügel ausgebildet ist. Die Antriebseinheit 4 ist dabei in einem vorderen Teilbereich von einem oberen Arm des Halters 6 fest gegriffen. Bei der Setzvorrichtung 2 handelt es sich um eine Stanzvorrichtung zum Einfügen von hier nicht näher dargestellten Stanzniete in Bauteile zur Verbindung von zwei Bauteilen. Die Bauteile werden hierbei in den C-Bügel eingebracht, anschließend wird mit Hilfe der Antriebseinheit 4 ein Stanzniet gegen die zu verbindenden Bauteile gefahren und diese werden mit Hilfe des Stanzniets verbunden. Der untere Bügelarm bildet dabei ein Widerlager. Eine derartige Setzvorrichtung 2 wird insbesondere zur Verbindung von Bauteilen bei Kraftfahrzeugen eingesetzt. Der Halter 6 ist hierbei insbesondere an einem verfahrbaren Maschinenteil, bspw. an einem Roboter befestigt. Alternativ können auch die zu verbindenden Bauteile oder auch eine gesamte Automobilkarosse entsprechend in die Öffnung des Halters 6 verfahren werden.

Die Antriebseinheit 4 erstreckt sich insgesamt von einem rückwärtigen Ende in Axialrichtung 8 zu einem vorderen Ende. Sie weist ein Antriebsgehäuse 10 auf, welches eine als Bauteilseite 12 bezeichnete Vorderseite sowie eine als Maschinenseite 14 bezeichnete Rückseite aufweist. Bei diesen Seiten handelt es sich bezüglich der Axialrichtung 8 gegenüberliegende Außenseiten der Antriebseinheit 4 speziell um die Seiten, die im montierten Zustand zum Halter 6 orientiert (Maschinenseite 14) bzw. vom Halter 6 weggerichtet orientiert ist (Bauteilseite 12).

Aus den Figuren 2 und 3 ist die grundsätzliche Geometrie der Antriebseinheit 4 und insbesondere auch des Antriebsgehäuses 10 zu entnehmen. Dieses umfasst einen zentralen Hauptteil 16, einen rückwärtigen Führungsteil 18 sowie einen vorderen, weiteren Führungsteil 20. Während die Führungsteile 18, 20 im wesentlichen rotationssymmetrisch zur Axialrichtung 8 mit zylindrischen Mantelflächen ausgebildet sind - im Falle des rückwärtigen Führungsteils 18 bis auf einen Verbindungsbereich 21 zum Hauptteil 16 - ist der Hauptteil 16 bezüglich der Axialrichtung 8 asymmetrisch und nicht rotationssymmetrisch ausgebildet. Und zwar ist er zur Bauteilseite 12 hin nach Art eines Teilzylinders ausgebildet und zur Maschinenseite 14 hin als ein im Wesentlichen quaderförmiges Element. Wie weiterhin aus den Figuren 2 und 3 zu entnehmen ist, weist ausschließlich der Hauptteil 16 und weiterhin ausschließlich zur Maschinenseite 14 hin eine durch Kühlrippen 22 gebildete Kühlstruktur auf. Insgesamt besteht das Antriebsgehäuse 10 vorzugsweise aus einem metallischen Leichtbauwerkstoff mit guter Wärmeleitfähigkeit, insbesondere aus Aluminium.

Auf der Maschinenseite 14 im quaderförmigen Teil des Antriebsgehäuses 10 sind Eintrittsöffnungen von Kühlkanälen zu erkennen, nämlich von einem (einzigen) Zuführkanal 24a sowie mehreren Auslasskanälen 24b. Weiterhin sind an der Maschinenseite 14 elektrische Anschlussstecker 26 für eine Stromversorgung und auch für eine datentechnische Anbindung von Steuerleitungen zu erkennen. Innerhalb des Zuführkanals 24a ist weiterhin ein Ventilator 28 zu erkennen. Über den Ventilator 28 und über die Kühlkanäle 24a, 24b wird im Betrieb bei Bedarf ein Kühlfluid, insbesondere Umgebungsluft angesaugt und durch den Innenraum des Antriebsgehäuses 10 hindurch geleitet und über die Auslasskanäle 24b wieder abgegeben.

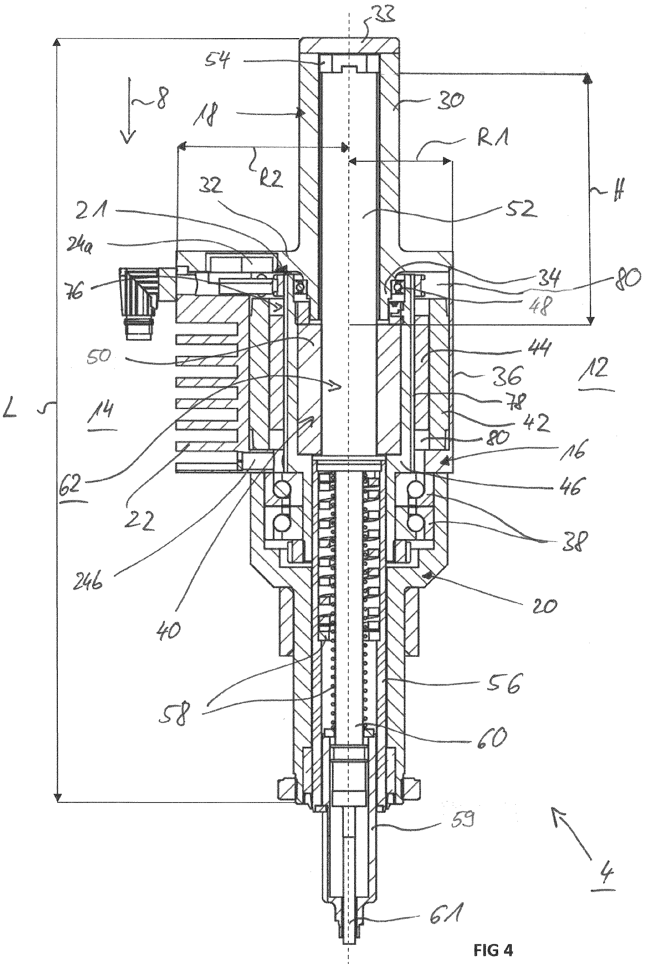

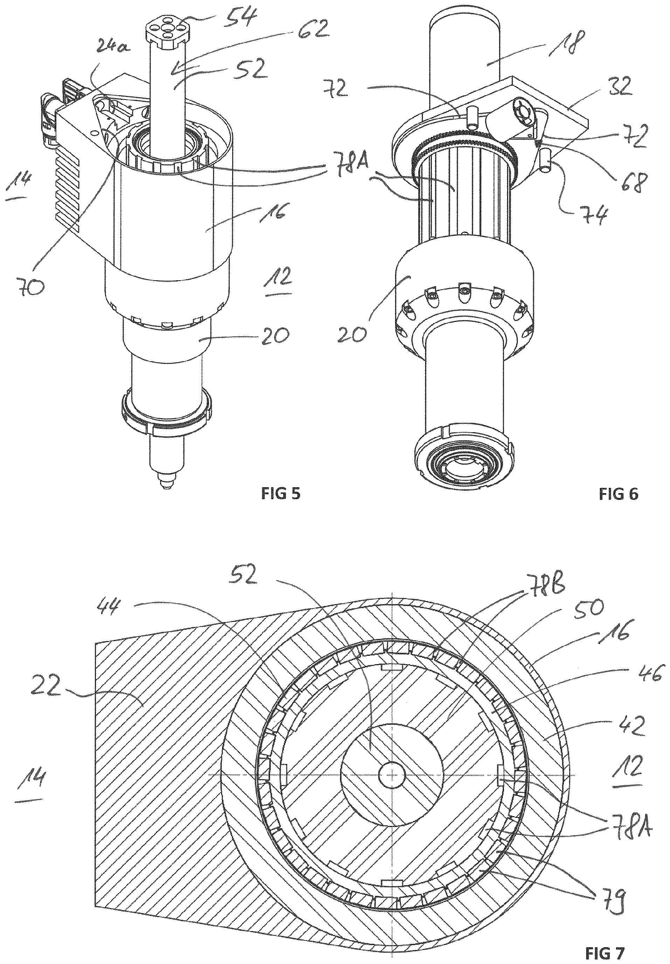

Der Aufbau der Antriebseinheit 4 ergibt sich insbesondere aus der Schnittdarstellung der Figur 4 und ergänzend auch aus den perspektivischen Darstellungen der Figuren 5 und 6.

An der Schnittzeichnung sind die drei Gehäuseteile hinteres Führungsteil 18, Hauptteil 16 sowie vorderes weiteres Führungsteil 20 zu erkennen. Das hintere Führungsteil 18 weist dabei einen rohrförmigen rückwärtigen Teilbereich 30 auf, welcher bis zu einem Befestigungsflansch 32 reicht und welcher am gegenüberliegenden Ende von einem Deckel 33 verschlossen ist. Ein Stutzenteil 34 des Teilbereichs 30 ragt in das Hauptteil 16 hinein. Der Befestigungsflansch 32 weist dabei die gleiche asymmetrische Querschnittskontur wie der Hauptteil 16 auf, wie sich insbesondere durch einen Vergleich der Figuren 5 und 6 ergibt.

Der Hauptteil 16 weist zur Bauteilseite 12 hin lediglich eine dünne Gehäusewandung 36 auf. Die Dicke dieser Wandung liegt dabei im Bereich von wenigen Millimetern zwischen 2 und 4 mm. An der Maschinenseite 14 ist die kammartige Struktur für die Ausbildung der Kühlrippen 22 zu entnehmen. An das Hauptteil 16 schließt sich in Axialrichtung 8 das weitere vordere Führungsteil 20 an. Auch dieses ist rohrförmig ausgebildet. Es ist hierbei gestuft ausgebildet und verjüngt sich nach vorne hin. Im rückwärtigen verbreiteten Teilbereich ist ein vorderes Lager 38 angeordnet, wobei hierzu im Ausführungsbeispiel insbesondere zwei Wälzlagerringe angeordnet sind.

Im Hauptteil 16 ist ein als Servomotor ausgebildeter Direktantrieb 40 integriert. Dieser umfasst einen außenliegenden Stator, gebildet durch ein entsprechendes Statorpaket 42 sowie einen innenliegenden Rotor, welcher durch ein Rotorpaket 44 sowie eine Rotorhülse 46 gebildet ist. Der Rotor rotiert im Betrieb um eine in Fig. 4 gestrichelt dargestellte Rotationsachse. Das Rotorpaket 44 ist dabei auf der Außenseite der Rotorhülse 46 befestigt. Die Rotorhülse 46 verjüngt sich stufenartig und weist einen vorderen Lagerbereich auf, der im vorderen Lager 38 zur Außenwandung des weiteren Führungsteils 20 hin gelagert ist. Im rückwärtigen Teil ist die Rotorhülse 46 innenseitig durch ein hinteres Lager 48 gelagert, wobei dieses hintere Lager 48 zwischen dem Stutzenteil 34 und der Rotorhülse 46 angeordnet ist. Wie gut zu erkennen ist, ist das vordere Lager 38 deutlich größer als das hintere Lager 48, da im Bereich des vorderen Lagers 38 erheblich größere Kräfte aufgenommen werden müssen. Hervorzuheben ist auch die Ausgestaltung und Anordnung des hinteren Lagers als Innenlager zwischen Rotorhülse 46 und dem Stutzenteil 34. Hierdurch lässt sich eine sehr kompakte Ausgestaltung erzielen mit einer nur geringen radialen Ausdehnung R1 zur Bauteilseite 12 hin.

Aufgrund der asymmetrischen Ausgestaltung des Hauptteils 16 ist die radialen Ausdehnung R2 zur Maschinenseite 14 hin deutlich größer.

Die Rotorhülse 46 ist innenseitig mit einer Spindelmutter 50 fest verbunden, sodass im Betrieb eine Rotationsbewegung des Rotors auf die Spindelmutter übertragen wird. Von der Spindelmutter 50 ist eine Spindel 52 aufgenommen, die innerhalb des rohrförmigen Teilbereichs 30 gleitverschieblich gelagert ist.

Die Figur 4 zeigt eine Situation bei vollständig in die hintere Position zurückgefahrener Spindel 52. In Axialrichtung 8 lässt sich diese um einen Zustellhub H nach vorne verschieben.

Bei maximalem Zustellhub H befindet sich das rückwärtige Ende der Spindel 52 auf Höhe des Befestigungsflansches 32 bzw. etwas oberhalb des hinteren Lagers 48.

Die Spindel 52 ist innerhalb des Führungsteils 18 drehfest geführt. Hierzu ist am rückwärtigen Ende der Spindel 52 ein Verdrehsicherungselement in Form einer in etwa quadratischen Platte 54 befestigt. Dies weist abgeschrägte Eckbereiche auf. Aufgrund der polygonartigen Ausgestaltung und einer komplementären Führung innerhalb des Führungsteils 18 ist daher die Spindel 52 drehfest geführt.

Im vorderen Teilbereich schließt sich an die Spindel 52 ein vorzugsweise als Rohr ausgebildeter Stößel 56 an, in dem im Ausführungsbeispiel zwei Federelemente 58 mit unterschiedlichen Federhärten angeordnet sind. Die Federelemente 58 sind dabei jeweils als Druckfedern (Schraubenfedern) ausgebildet. Innerhalb des Stößels 56 ist ein Niederhalter 59 gleitverschieblich geführt, der frontseitig aus dem Stößel 56 austritt. Der Niederhalter 59 ist dabei entgegen der Federkraft eines der beiden Federelemente 58 federnd gelagert. Weiterhin ist innerhalb des Niederhalters 59 ein Stempel 60 gleitverschieblich gelagert. Im Ausführungsbeispiel ist endseitig am Stempel 60 noch ein Druckstab 61 insbesondere austauschbar befestigt.. Der Druckstab 61 ist hierbei ebenso wie der Stößel 56 mit der Spindel 52 verbunden. Diese drei Bauteile 52, 56, 61 bilden dabei gemeinsam ein Stellelement 62 aus. Wird die Spindel 52 um den Zustellhub H nach vorne versetzt, so fährt der Stößel 56 und mit ihm der Druckstab 61 aus dem vorderen weiteren Führungsteil 20 aus.

Die Antriebseinheit 4 weist insgesamt eine Gesamtlänge L auf, die definiert ist durch den Abstand zwischen dem rückseitigen Ende des Führungsteils 18 und dem vorderseitigen Ende des weiteren Führungsteils 20. Am vorderen Ende des weiteren Führungsteils 20 ist die Antriebseinheit 4 insgesamt durch bspw. ein Halteelement 64 nach Art einer Schelle am Halter 6 (Fig. 1) gehalten.

In Axialrichtung 8 schließt sich frontseitig weiterhin eine hier nicht näher dargestellte Zuführeinheit an, über die die einzelnen Verbindungselemente, insbesondere Stanzniete vereinzelt zugeführt und dann mittels des Stempels 60 gesetzt werden.

Die hier dargestellte Ausführungsvariante mit dem Stößelrohr 56 und dem Niederhalter 56 ist für eine spezielle Stanzniet-Anwendung ausgebildet. Bei anderen Ausgestaltungen ist bspw. der Niederhalter 56 nicht mit in die Antriebseinheit 4 integriert.

Aufgrund der im Betrieb auftretenden hohen Setzkräfte, insbesondere beim sprunghaften Anstieg beim Stanzvorgang beim Einfügen eines Stanzelements, beispielsweise eines Stanzniets in ein Bauteil ist die Übertragung eines hohen Drehmoments zwischen der Spindel 52 und dem Antriebsgehäuse 10 erforderlich.

Um eine kompakte Bauweise zu erzielen, insbesondere eine möglichst geringe Ausdehnung in radialer Richtung R1, ist in einem Verbindungsbereich 21, also im Bereich des Befestigungsflansches 32, das Antriebsgehäuse 10 für eine asymmetrische Drehmomentaufnahme ausgebildet. Hierzu ist insbesondere vorgesehen, dass der Befestigungsflansch 32 an seiner Unterseite eine asymmetrische Eingriffskontur 68 aufweist, die entsprechend mit einer Aufnahmekontur 70 des Hauptteils 16 korrespondiert. Die Eingriffskontur 68 ist dabei gebildet durch einen in etwa plattenförmigen Ansatz an der Unterseite des Befestigungsflansches 32, wobei diese Platte eine Umfangskontur aufweist, welche zur Bauteilseite 12 hin als Teilkreis und zur Maschinenseite 14 hin als Polygon und insbesondere nach Art eines Dreieckes ausgebildet ist. Die Seitenflächen dieser Platte der Eingriffskontur 68 definieren dabei Drehmomentübertragungselemente und insbesondere Drehmomentübertragungsflächen 72. Die Aufnahmekontur 70 des Hauptteils ist exakt komplementär zu der Eingriffskontur 68 ausgebildet. Die beiden Teile liegen daher spielfrei ineinander ein. Aufgrund der zur Maschinenseite 14 hin teilkreisförmigen Ausgestaltung erfolgt die Drehmomentübertragung ausschließlich auf der Maschinenseite 14.

Wie insbesondere aus der Fig. 6 zu entnehmen sind, sind auf der Maschinenseite 16 Befestigungselemente 74 (Schrauben) angeordnet, die zur axialen Sicherung des hinteren Führungsteils 18 am Hauptteil 16 dienen. Diese übernehmen jedoch keine Drehmomentkräfte.

Ein weiterer, von der speziellen Ausgestaltung der Drehmomentmitnahme unabhängiger Aspekt ist eine Innenkühlung im Bereich der Motorkomponenten, also im Bereich des Statorpakets 42 sowie des Rotorpakets 44. Innerhalb des Hauptteils 16 ist ein freier Innenraum 76 definiert, in dem die einzelnen Motorkomponenten angeordnet sind. Die Innenkühlung zeichnet sich nunmehr dadurch aus, dass in diesen freien Innenraum über den Zuführkanal 24a Kühlluft eingeführt wird, welche entlang der Motorkomponenten in Axialrichtung 8 durch den Hauptteil 16 strömt und anschließend diesen wieder über die Auslasskanäle 24b verlässt. Die Strömungsführung der Kühlluft geht insbesondere auch aus den Fig. 5 bis 7 hervor.

Um diese Strömungsführung der Kühlluft zu ermöglichen sind insbesondere als Nuten 78A ausgebildete erste Strömungskanäle vorgesehen, die sich in Axialrichtung 8 erstrecken. Ergänzend sind vorzugsweise Freiräume und Spalte 78B innerhalb des Rotorpakets 44, also insbesondere Freiräume zwischen den einzelnen Magneten 79 als zweite Strömungskanäle genutzt und werden im Betrieb von Kühlluft durchströmt (Variante gemäß Fig. 7).

Die Strömungskanäle (Nuten 78A bzw. Spalte 78B) verbinden dabei einen rückwärtigen Ringraum 80 auf einer Einströmseite mit einem vorderen Ringraum 80 auf einer Ausströmseite(vgl. Fig. 4). Die zugeführte Luft verteilt sich über den hinteren Ringraum 80 umfangseitig und strömt über die Strömungskanäle nach vorne, sodass eine gleichmäßige Kühlung um den gesamten Umfang erreicht wird. Die Strömungskanäle sind vorzugsweise um den Umfang gleichverteilt angeordnet.

Die Nuten 78A sind gemäß einer ersten in den Fig 5 und 6 dargestellten Variante an der Außenseite der Rotorhülse 46 ausgebildet. Die Nuten 78A verlaufen daher direkt unterhalb des Rotorpakets 44.

Vorzugsweise sind die Nuten 78A jedoch - wie in Fig. 7 dargestellt - auf der dem Rotorpaket 44 gegenüberliegenden Seite der Rotorhülse 46 angeordnet. Sie können in einer Innenmantelfläche der Rotorhülse 46 ausgebildet sein. Im Ausführungsbeispiel sind sie in einer Außenmantelfläche der Spindelmutter 50 eingebracht. Durch diese Anordnung bleibt der elektro-mechanische Aufbau der Motorkomponenten unbeeinflusst von den Nuten 78A. Gleichzeitig wird eine unmittelbare, direkte Kühlung der Rotorkomponenten erreicht.

Aus Fig. 7 ist allgemein zu entnehmen, dass die Spindel 52 konzentrisch von der Spindelmutter 50 umgeben ist, an der wiederum die Rotorhülse 46 unmittelbar anliegend und drehfest befestigt ist. Außenseitig ist auf der Rotorhülse 46 das Rotorpaket 44 mit einer Vielzahl von Magneten 79 bestückt. Zwischen benachbarten Magneten 79 sind jeweils die Spalte 78B ausgebildet. Das Rotorpaket 44 ist schließlich unter Freilassung eines geringen Motorspaltes vom Statorpaket 42 umgeben, welches schließlich von dem Gehäuse des Hauptteils 16 unmittelbar umgeben ist. Auf der Maschinenseite 14 ist gut die trapezartige Querschnittsfläche mit den massiven Kühlrippen 22 und auf der Bauteilseite 12 die zumindest halbkreisförmige Ausgestaltung zu erkennen, die vorzugsweise fluchtend und absatzfrei in die trapezartige Maschinenseite 14 übergeht.

Die durch die Summe der Nuten 78A gebildete (Strömungs-) Querschnittsfläche ist dabei vorzugsweise größer als die durch die Summe der Spalten 78B gebildete (Strömungs-) Querschnittsfläche. Vorzugsweise ist sie mehr als 50% größer und insbesondere etwa doppelt so groß. Die Summe der Nuten 78A und der Spalte 78B definieren eine Gesamtquerschnittsfläche. Diese ist gleich oder größer einer Querschnittsfläche des Zuführkanals 24a. Bevorzugt ist weiterhin die Querschnittsfläche des Zuführkanals 24a gleich der Summe der Querschnittsflächen der Auslasskanäle 24b (vgl. Fig. 3).

### Bezugszeichenliste

- 2: Setzvorrichtung
- 4: Antriebseinheit
- 6: Halter
- 8: Axialrichtung
- 10: Antriebsgehäuse
- 12: Bauteilseite
- 14: Maschinenseite
- 16: Hauptteil
- 18: Führungsteil
- 20: weiteres Führungsteil
- 21: Verbindungsbereich
- 22: Kühlrippen
- 24a: Zuführkanal
- 24b: Auslasskanal
- 26: Stecker
- 28: Ventilator
- 30: rohrförmiger Teilbereich
- 32: Befestigungsflansch
- 33: Deckel
- 34: Stutzenteil
- 36: Gehäusewandung
- 38: vorderes Lager
- 40: Direktantrieb
- 42: Statorpaket
- 44: Rotorpaket
- 46: Rotorhülse
- 48: hinteres Lager
- 50: Spindelmutter
- 52: Spindel
- 54: Verdrehsicherungselement
- 56: Stößel
- 58: Federelement
- 59: Niederhalter
- 60: Stempel
- 61: Druckstab
- 62: Stellelement
- 64: Halteelement
- 68: Eingriffskontur
- 70: Aufnahmekontur
- 72: Drehmomentübertragungsfläche
- 74: Befestigungselement
- 76: freier Innenraum
- 78A: Nut
- 78B: Spalt
- 79: Magnet
- 80: Ringraum

- R1, R2: radiale Ausdehnung
- H: Zustellhub
- L: Gesamtlänge

## Patentansprüche

1. Antriebseinheit (4) für eine Setzvorrichtung (2), insbesondere ein Nietsetzgerät,
- mit einem elektrischen Direktantrieb (40) umfassend Motorkomponenten, nämlich ein Rotorpaket (44) und ein Statorpaket (42)
- mit einem vom Direktantrieb (40) in einer Axialrichtung (8) linear versetzbares Stellelement (62), welches von den Motorkomponenten konzentrisch umgeben ist
- mit einem sich in Axialrichtung (8) erstreckenden Antriebsgehäuse (10) mit einem Innenraum (76), in dem die Motorkomponenten sowie das Stellelement (62) aufgenommen sind, wobei das Antriebsgehäuse (10) aufweist
-- eine erste Seite, welche im Gebrauch als vordere Bauteilseite (12) vorgesehen ist, sowie eine zweite Seite, welche im Gebrauch als hintere Maschinenseite (14) vorgesehen ist, und weiterhin
-- ein Hauptteil (16) sowie einen mit diesem in einem Verbindungsbereich (21) verbundenen Führungsteil (18), wobei in dem Führungsteil (18) das Stellelement (62) drehfest geführt ist, **dadurch gekennzeichnet,**
- **dass** im Verbindungsbereich (21) das Hauptteil (16) und das Führungsteil (18), in einer Ebene senkrecht zur Axialrichtung (8) betrachtet, asymmetrisch für eine asymmetrische Übertragung eines Drehmoments ausgebildet sind und hierzu im Verbindungsbereich (21) zwischen dem Führungsteil (18) und dem Hauptteil (16) Drehmomentübertragungselemente zur asymetrischen Übertragung des Drehmoments angeordnet sind.

2. Antriebseinheit (4) nach dem vorhergehenden Anspruch,
**dadurch gekennzeichnet,**
**dass** der Verbindungsbereich (21) derart ausgebildet ist, dass die Drehmomentübertragung ausschließlich auf der vorgesehenen Maschinenseite (14) erfolgt.

3. Antriebseinheit (4) nach einem der vorhergehenden Ansprüche,
**dadurch gekennzeichnet, dass** auf der vorgesehenen Bauteilseite (12) das Hauptteil (16) eine dünnere Gehäusewandung (36) und auf der vorgesehenen Maschinenseite (14) eine im Vergleich massivere Wandung aufweist.

4. Antriebseinheit (4) nach einem der vorhergehenden Ansprüche,
**dadurch gekennzeichnet,**
**dass** eine radiale Ausdehnung (R2) des Hauptteils (16) zur vorgesehenen Maschinenseite (14) um zumindest 25% und vorzugsweise um zumindest 40 oder 50% größer ist als seine radiale Ausdehnung (R1) auf der vorgesehenen Bauteilseite (12).

5. Antriebseinheit (4) nach einem der vorhergehenden Ansprüche,
**dadurch gekennzeichnet,**
**dass** das Hauptteil (16) und das Führungsteil (18) zur Ausbildung von Drehmomentübertragungsflächen (72) formschlüssig ineinandergreifen und hierzu eine asymmetrische Eingriffskontur (68) ausgebildet ist.

6. Antriebseinheit (4) nach dem vorhergehenden Anspruch,
**dadurch gekennzeichnet,**
**dass** die Eingriffskontur (68) - senkrecht zur Axialrichtung (8) betrachtet - umlaufend ausgebildet ist.

7. Antriebseinheit (4) nach einem der beiden vorhergehenden Ansprüche,
**dadurch gekennzeichnet,**
**dass** die Eingriffskontur (68) - senkrecht zur Axialrichtung (8) betrachtet - zur vorgesehenen Bauteilseite (12) teilkreisförmig und zur vorgesehenen Maschinenseite (14) hin polygonförmig, insbesondere dreieckförmig ist.

8. Antriebseinheit (4) nach einem Ansprüche 5 bis 7,
**dadurch gekennzeichnet,**
**dass** das Führungsteil (18) einen Befestigungsflansch (32) aufweist und die Eingriffskontur (68) an der Unterseite des Befestigungsflansches (32) ausgebildet ist.

9. Antriebseinheit (4) nach einem der vorhergehenden Ansprüche,
**dadurch gekennzeichnet,**
**dass** das Führungsteil (18) einen rohrförmigen rückwärtigen Teilbereich (30) aufweist, in dem das Stellelement (62) gleitverschieblich geführt ist.

10. Antriebseinheit (4) nach einem der vorhergehenden Ansprüche,
**dadurch gekennzeichnet,**
**dass** sie für einen definierten Zustellhub (H) ausgelegt ist, bei dem sich das Stellelement (62) in einer ausgefahrenen Position befindet, dass zur drehfesten Lagerung des Stellelements (62) weiterhin am Stellelement (62) ein Verdrehsicherungselement (54), insbesondere ein polygonförmiges Gleitelement befestigt ist, welches innerhalb des Führungselements (18) gleitverschieblich geführt ist, wobei in der ausgefahrenen Position das Verdrehsicherungselement (54) auf der axialen Höhe des Verbindungsbereichs (21) positioniert ist.

11. Antriebseinheit (4) nach einem der vorhergehenden Ansprüche,
**dadurch gekennzeichnet,**
**dass** das Stellelement (62) in einem rückwärtigen Bereich als eine Spindel (52) ausgebildet ist, die teilweise von einer Spindelmutter (50) umgeben ist, welche mit dem Rotorpaket (44) des elektrischen Direktantriebs (40) verbunden ist, wobei hierzu insbesondere die Spindelmutter (50) an der Innenseite einer Rotorhülse (46) befestigt ist und das Rotorpaket (44) an der Außenseite der Rotorhülse (46) befestigt ist.

12. Antriebseinheit (4) nach einem der vorhergehenden Ansprüche,
**dadurch gekennzeichnet,**
**dass** in das Hauptteil (16) eine Kühlvorrichtung (24a, 24b, 28) zur Innenkühlung der Motorkomponenten mittels eines in den Innenraum (76) einströmbaren Fluids, insbesondere Luft, angeordnet ist.

13. Antriebseinheit (4) nach dem vorhergehenden Anspruch,
**dadurch gekennzeichnet,**
**dass** an zumindest einer der Motorkomponenten entlang Nuten (78A) als Strömungskanäle für das Fluid ausgebildet sind, die Nuten (78) erste Strömungskanäle
bilden, und ergänzend zweite Strömungskanäle durch Spalte (78B) zwischen Magneten (79) innerhalb einer der Motorkomponenten ausgebildet sind.

14. Antriebseinheit (4) nach einem der Ansprüche 12 bis 13,
**dadurch gekennzeichnet,**
**dass** die Strömungskanäle (78A, 78B) eine Gesamtquerschnittsfläche bilden, welche größergleich einer Querschnittsfläche eines Zuführkanals (24a) ist.

15. Antriebseinheit (4) nach einem der vorhergehenden Ansprüche,
**dadurch gekennzeichnet,**
**dass** sie an einem insbesondere C-förmigen Halter (6) befestigt ist und am Vorderende ein Stempel (60) sowie weiterhin ein Niederhalter (59) und/oder eine automatische Zuführeinheit für Befestigungselemente angeordnet sind.

## Claims

1. Drive unit (4) for a setting device (2), in particular a rivet setting device,
- with an electric direct drive (40) comprising motor components, namely a rotor core (44) and a stator core (42)
- with a positioning element (62) which is linearly displaceable in an axial direction (8) by the direct drive (40) and is concentrically surrounded by the motor components
- with a drive housing (10) extending in the axial direction (8) and having an interior (76) in which the engine components and the positioning element (62) are accommodated, wherein the drive housing (10) has
- a first side, which in use is provided as front component side (12), and a second side, which in use is provided as rear machine side (14), and further
- a main part (16) as well as a guide part (18) connected thereto in a connecting region (21), wherein the positioning element (62) is guided in the guide part (18) in a rotationally fixed manner,
**characterized in**
- **that** in the connecting region (21) the main part (16) and the guide part (18), viewed in a plane perpendicular to the axial direction (8), are designed asymmetrically for an asymmetrical transmission of a torque and for this purpose torque transmission elements for the asymmetrical transmission of the torque are arranged in the connecting region (21) between the guide part (18) and the main part (16).

2. Drive unit (4) according to the preceding claim,
**characterized in**
**in that** the connecting region (21) is designed in such a way that the torque is transmitted exclusively on the intended machine side (14).

3. Drive unit (4) according to one of the preceding claims,
**characterized in**
**that** the main part (16) has a thinner housing wall (36) on the intended component side (12) and a comparatively more solid wall on the intended machine side (14).

4. Drive unit (4) according to one of the preceding claims,
**characterized in**
**that** a radial extension (R2) of the main part (16) to the intended machine side (14) is at least 25 % and preferably at least 40 or 50 % larger than its radial extension (R1) on the intended component side (12).

5. Drive unit (4) according to one of the preceding claims,
**characterized in**
**that** the main part (16) and the guide part (18) positively engage in one another to form torque transmission surfaces (72) and for this purpose an asymmetrical engagement contour (68) is formed.

6. Drive unit (4) according to the preceding claim,
**characterized in**
**that** the engagement contour (68) - viewed perpendicularly to the axial direction (8) - is formed circumferentially.

7. Drive unit (4) according to one of the two preceding claims,
**characterized in**
**that** the engagement contour (68) - viewed perpendicularly to the axial direction (8) - is part-circular towards the provided component side (12) and polygonal, in particular triangular, towards the provided machine side (14).

8. Drive unit (4) according to one of claims 5 to 7,
**characterized in**
**that** the guide part (18) has a fastening flange (32) and the engagement contour (68) is formed on the underside of the fastening flange (32).

9. Drive unit (4) according to one of the preceding claims,
**characterized in**
**that** the guide part (18) has a tubular rear portion (30) in which the positioning element (62) is slidably guided.

10. Drive unit (4) according to one of the preceding claims,
**characterized in**
**that** it is designed for a defined feed stroke (H), in which the positioning element (62) is located in an extended position, in that, for the rotationally fixed mounting of said positioning element (62), furthermore an anti-rotation element (54), in particular a polygonal-shaped sliding element, is fastened to the positioning element (62), said anti-rotation element (54) being slidably guided within the guide element (18), wherein in the extended position the anti-rotation element (54) is positioned at the axial height of the connecting region (21).

11. Drive unit (4) according to one of the preceding claims,
**characterized in**
**that** in a rear region the positioning element (62) is designed as a spindle (52) which is partially surrounded by a spindle nut (50), said spindle nut being connected to the rotor assembly (44) of the electric direct drive (40), wherein for this purpose in particular the spindle nut (50) is fastened to the inside of a rotor sleeve (46) and the rotor assembly (44) is fastened to the outside of the rotor sleeve (46).

12. Drive unit (4) according to one of the preceding claims,
**characterized in**
**that** a cooling device (24a, 24b, 28) is arranged in the main part (16) for the internal cooling of the engine components by means of a fluid, in particular air, which can flow into the interior (76).

13. Drive unit (4) according to the preceding claim,
**characterized in**
**that** along at least one of the motor components grooves (78A) are formed as flow channels for the fluid, the grooves form first flow channels, and second flow channels are additionally formed by gaps (78B) between magnets (79) within one of the motor components.

14. Drive unit (4) according to any one of claims 12 to 13,
**characterized in**
**that** the flow channels (78A, 78B) form a total cross-sectional area which is greater than or equal to a cross-sectional area of a feed channel (24a).

15. Drive unit (4) according to one of the preceding claims,
**characterized in**
**that** it is fastened to a holder (6), in particular a C-shaped holder, and at the front end a punch (60) and, furthermore, a holding-down device (59) and/or an automatic feed unit for fastening elements are arranged.

## Revendications

1. Unité d'entraînement (4) pour un dispositif de pose (2), en particulier un dispositif de pose de rivets,
- avec un entraînement électrique direct (40) comprenant des composants de moteur, notamment un noyau de rotor (44) et un noyau de stator (42)
- avec un élément de positionnement (62) qui peut être déplacé linéairement dans une direction axiale (8) par l'entraînement direct (40) et qui est entouré concentriquement par les composants du moteur
- avec un carter d'entraînement (10) s'étendant dans la direction axiale (8) et comportant un intérieur (76) dans lequel sont logés les composants du moteur et l'élément de positionnement (62), le carter d'entraînement (10) comportant
- une première face, qui en service est prévue comme face avant du composant (12), et une deuxième face, qui en service est prévue comme face arrière de la machine (14), et en outre
- une partie principale (16) ainsi qu'une partie de guidage (18) reliée à ladite partie principale dans une zone de liaison (21), l'élément de positionnement (62) étant guidé dans la partie de guidage (18) de manière résistante à la torsion,
**caractérisée en ce**
- **que** dans la zone de liaison (21) la partie principale (16) et la partie guidage (18) - vu dans un plan perpendiculaire à la direction axiale (8) - sont conçues de manière asymétrique pour une transmission asymétrique d'un couple et, à cet effet, des éléments de transmission du couple pour la transmission asymétrique du couple sont disposés dans la zone de liaison (21) entre la partie de guidage (18) et la partie principale (16).

2. Unité d'entraînement (4) selon la revendication précédente,
**caractérisée en ce**
**que** la zone de liaison (21) est conçue de telle manière que la transmission du couple se fait exclusivement du côté machine prévue (14).

3. Unité d'entraînement (4) selon l'une des revendications précédentes,
**caractérisée en ce**
**que** la partie principale (16) a une paroi de boîtier plus mince (36) du côté composant prévu (12) et une paroi comparativement plus solide du côté machine prévu (14).

4. Unité d'entraînement (4) selon l'une des revendications précédentes,
**caractérisée en ce**
**qu'**une extension radiale (R2) de la partie principale (16) vers le côté machine prévu (14) est supérieure d'au moins 25% et de préférence d'au moins 40 ou 50 % à son extension radiale (R1) du côté composant prévu (12).

5. Unité d'entraînement (4) selon l'une des revendications précédentes,
**caractérisée en ce**
**que** la partie principale (16) et la partie de guidage (18) s'engagent l'une dans l'autre par complémentarité de forme pour former des surfaces de transmission de couple (72), et à cet effet un contour d'engagement asymétrique (68) est formé.

6. Unité d'entraînement (4) selon la revendication précédente,
**caractérisée en ce**
**que** le contour d'engagement (68) - vu perpendiculairement à la direction axiale (8) - est formé de manière circonférentielle.

7. Unité d'entraînement (4) selon l'une des deux revendications précédentes,
**caractérisée en ce**
**que** le contour d'engagement (68) - vu perpendiculairement à la direction axiale (8) - est partiellement circulaire vers le côté composant prévu (12) et polygonal, en particulier triangulaire, vers le côté de la machine prévu (14).

8. Unité d'entraînement (4) selon l'une des revendications 5 à 7,
**caractérisée en ce**
**que** la partie de guidage (18) comporte une bride de fixation (32) et que le contour d'engagement (68) est formé sur la face inférieure de la bride de fixation (32).

9. Unité d'entraînement (4) selon l'une des revendications précédentes,
**caractérisée en ce**
**que** la partie de guidage (18) comporte une zone partielle arrière tubulaire (30) dans laquelle l'élément de positionnement (62) est guidé de manière coulissante.

10. Unité d'entraînement (4) selon l'une des revendications précédentes,
**caractérisée en ce**
**qu'**elle est conçue pour une garniture de frein définie (H), dans laquelle l'élément de positionnement (62) se trouve dans une position déployée, que, pour le montage fixe en rotation de l'élément de positionnement (62), en outre un élément anti-rotation (54), en particulier un élément coulissant de forme polygonale, est fixé sur l'élément de positionnement (62), ledit élément anti-rotation (54) étant guidé de manière coulissante à l'intérieur de l'élément de guidage (18), dans lequel dans la position déployée l'élément anti-rotation (54) est positionné à la hauteur axiale de la zone de liaison (21).

11. Unité d'entraînement (4) selon l'une des revendications précédentes,
**caractérisé en ce**
**que** l'élément de positionnement (62) est conçu dans une zone arrière comme une broche (52) qui est partiellement entourée d'un écrou de broche (50), ledit écrou de broche étant relié au bloc rotor (44) de l'entraînement direct électrique (40), dans lequel à cet effet notamment l'écrou de broche (50) est fixé à l'intérieur d'un manchon de rotor (46) et l'ensemble rotor (44) est fixé à l'extérieur du manchon de rotor (46).

12. Unité d'entraînement (4) selon l'une des revendications précédentes,
**caractérisée en ce**
**qu'**un dispositif de refroidissement (24a, 24b, 28) est disposé dans la partie principale (16) pour le refroidissement interne des composants du moteur au moyen d'un fluide, en particulier de l'air, qui peut s'écouler à l'intérieur (76).

13. Unité d'entraînement (4) selon la revendication précédente,
**caractérisée en ce**
**que** des rainures (78A) sont formées le long d'au moins un des composants du moteur comme canaux d'écoulement pour le fluide, que les rainures forment des premiers canaux d'écoulement, et des deuxièmes canaux d'écoulement sont complémentairement formés par des espaces (78B) entre des aimants (79) dans un des composants du moteur.

14. Unité d'entraînement (4) selon l'une des revendications 12 à 13,
**caractérisée en ce**
**que** les canaux d'écoulement (78A, 78B) forment une section transversale totale qui est supérieure ou égale à une section transversale d'un canal d'alimentation (24a).

15. Unité d'entraînement (4) selon l'une des revendications précédentes,
**caractérisée en ce**
**qu'**elle est fixée sur un support (6), en particulier un support en forme de C, et qu'à l'extrémité avant, un poinçon (60) et en outre un serre-flan (59) et/ou une unité d'alimentation automatique pour les éléments de fixation sont disposés.
